# EUROPÄISCHE PATENTANMELDUNG

(11) **EP 1 946 812 A1**
(43) Veröffentlichungstag der Anmeldung: **23.07.2008**
(21) Anmeldenummer: 07118467.5
(22) Anmeldetag: 15.10.2007
(51) Int. Cl.: B01D 29/15, B01D 35/16

(54) **Rückspülbarer Filter**

(30) Priorität: 04.12.2006 DE 102006057388
(71) Anmelder: HANS SASSERATH & CO KG, 41352 Korschenbroich (DE)
(72) Erfinder: Hecking, Willi, 41372, Niederkrüchten-Elmpt (DE)
(74) Vertreter: Weisse, Renate

(57) **Zusammenfassung**

Eine Filteranordnung zum Filtern von Trinkwasser mit einem absperrbaren Einlass (14) und einem absperrbaren Auslass (16) und einem zwischen dem Einlass und dem Auslass angeordneten Filter (22, 23) ist dadurch gekennzeichnet, dass zwischen Filter und Auslass eine Kammer (63) vorgesehen ist, die im unteren Bereich (61) mit dem Filter in Verbindung steht und die im oberen Bereich abgeschlossen ist, so dass sich in der Kammer ein Luftkissen bildet und zwischen Einlass und Filter ein absperrbarer Ablauf (45) vorgesehen ist. Zum Rückspülen werden Einlass und Auslass abgesperrt und anschließend der Ablauf geöffnet. Dann drückt die Luft des Luftkissens das Wasser in umgekehrter Richtung durch den Filter zum Ablauf.

## Beschreibung

### Technisches Gebiet

Die Erfindung betrifft eine Filteranordnung zum Filtern von Trinkwasser mit einem absperrbaren Einlass und einem absperrbaren Auslass und einem zwischen dem Einlass und dem Auslass angeordneten Filter. Solche Filter können zum Beispiel Aktivkohlefilter sein, welche am Verwendungsort unmittelbar vor der Zapfstelle angebracht sind.

Ein Filterpacket ist zwischen einem Einlass und einem Auslass angeordnet. Das Wasser wird durch das Filterpacket geleitet. In dem Wasser befindliche Verunreinigungen und Partikel bleiben in dem Filtermaterial hängen. Mit der Zeit setzt sich der Filter zu. Dann muß das Filterpacket entweder gereinigt oder ausgetauscht werden. Für diesen Vorgang werden der Einlass und der Auslass abgesperrt. Dann ist der Filter problemlos zugänglich.

Rückspülfilter sind Filter, bei denen der Filter von Zeit zu Zeit in umgekehrter Richtung durchströmt wird. Bei bekannten Filtern wird durch ein Ventilsystem die Strömung umgelenkt. Dabei nimmt die Wasserströmung die Partikel und Verunreinigungen im Filter mit und wird über einen Ablauf entsorgt.

### Offenbarung der Erfindung

Es ist Aufgabe der Erfindung, einen Filter der eingangs genannten Art zu schaffen, der ohne Aufwand und Verwendung zusätzlicher Ventile rückspülbar ist.

Erfindungsgemäß wird die Aufgabe dadurch gelöst, dass
(a) zwischen Filter und Auslass eine Kammer vorgesehen ist, die im unteren Bereich mit dem Filter in Verbindung steht und die im oberen Bereich abgeschlossen ist, so dass sich in der Kammer ein Luftkissen bildet und
(b) zwischen Einlass und Filter ein absperrbarer Ablauf vorgesehen ist.

Bei einer solchen Anordnung erfolgt die Rückspülung, indem zunächst der Einlass und der Auslass abgesperrt werden. Anschließend wird der Ablauf geöffnet. Das in der Kammer befindliche, ständig vorhandene Luftkissen steht vor dem Rückspülvorgang unter Wasserdruck. Dieser Druck liegt bei typischen Anwendungen im Bereich von 4 bar. Der Druck am geöffneten Ablauf ist Atmosphärendruck. Wenn der Ablauf geöffnet wird, übt das Luftkissen einen Druck auf das im Filter befindliche Wasser in Richtung auf den Ablauf aus. Das Wasser wird in umgekehrter Richtung durch den Filter aus dem Ablauf herausgedrückt. Dabei werden die im Filter befindlichen Partikel mitgenommen. Es versteht sich, dass die Kammer ein Volumen aufweist, das groß genug ist um eine ausreichende Rückspülung mit dem im Filter vorhandenen Wasser durchzuführen. Bei Bedarf kann die Rückspülung wiederholt werden.

Nach erfolgter Rückspülung wird der Ablauf geschlossen und der Einlass und der Auslass geöffnet. Dann fließt wieder Wasser in die Anordnung. Da die Kammer nach oben abgeschlossen ist, kann die darin vorhandene Luft nicht entweichen. Sie bleibt also ständig in der Kammer erhalten. Durch den gegenüber Atmosphärendruck höheren Wasserdruck nimmt die Luft lediglich ein kleineres Volumen ein.

Vorzugsweise ist der Filter im unteren Bereich einer Filtertasse angeordnet, die am Boden einen absperrbaren Ablauf aufweist. Durch die Verwendung einer Filtertasse, die lösbar befestigt ist, ist der Filter leicht zugänglich. Das ermöglicht das zusätzliche Austauschen des Filtermaterials oder andere Wartungsvorgänge.

Die Kammer kann in einem Einsatzteil im oberen Bereich der Filtertasse gebildet sein, welches einen Kanal zur Verbindung des Filters mit dem Auslass aufweist. In der Filtertasse kann ein äußerer Hohlraum von einer Wandung gebildet sein, in welchem das Wasser vom Einlass nach unten und durch Öffnungen in der Wandung in den Innenraum der Filtertasse mit dem Filter fließt. Vorzugsweise ist ein Sieb vor den Öffnungen vorgesehen.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung eines in einer Filtertasse angeordneten Wasserfilters mit einer Kugelhahnanordnung zum Absperren des Wassereinlasses und -auslasses.
- Fig.2: ist ein Querschnitt durch die Anordnung aus Fig.1.
- Fig.3: ist ein Ausschnitt des oberen Teils der Anordnung aus Fig.2.
- Fig.4: ist ein Ausschnitt des unteren Teils der Anordnung aus Fig.2.
- Fig.5: zeigt eine vereinfachte Version eines Filters mit Rückspülung ohne Kugelhahn.

### Beschreibung des Ausführungsbeispiels

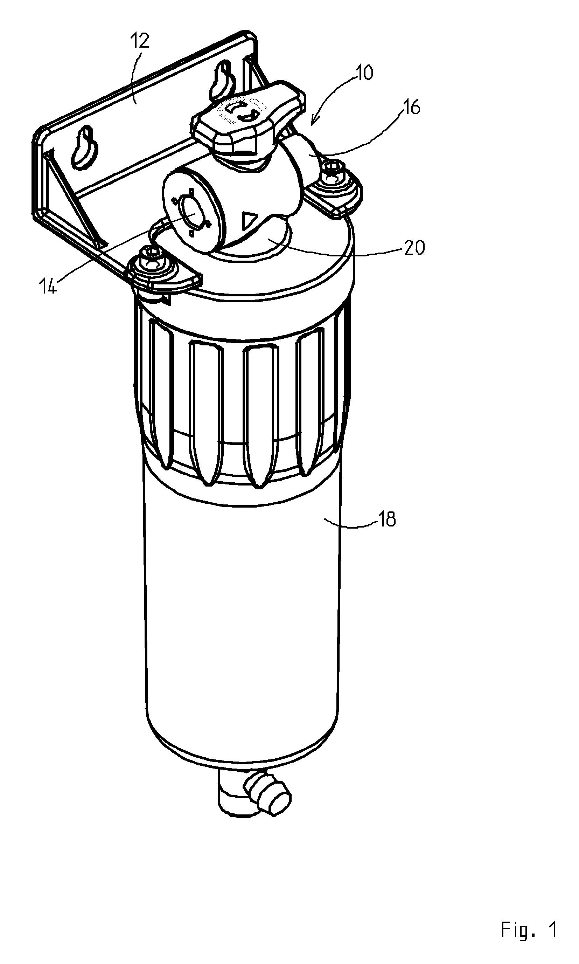

Fig.1 zeigt eine allgemein mit 10 bezeichnete Kugelhahnanordnung mit einer Filteranordnung 18. Die Kugelhahnanordnung 10 ist in einer Wandhalterung 12 eingehängt. Die Kugelhahnanordnung 10 weist einen ersten Anschluss 14 auf, der einen Einlass darstellt. Es ist weiterhin ein zweiter Anschluss 16 vorgesehen, der einen Auslass darstellt. Durch Schläuche (nicht dargestellt) fließt das Wasser auf noch zu beschreibende Weise vom Einlass 14 durch eine allgemein mit 18 bezeichnete Filteranordnung und einen dritten Anschluss 20 zum Auslass 16. Die Anordnung wird dezentral unmittelbar vor einem Waschbecken oder einer Spüle verwendet. Dadurch wird vermieden, dass der Druckverlust an der Anordnung das gesamte Trinkwassersystem beeinflusst.

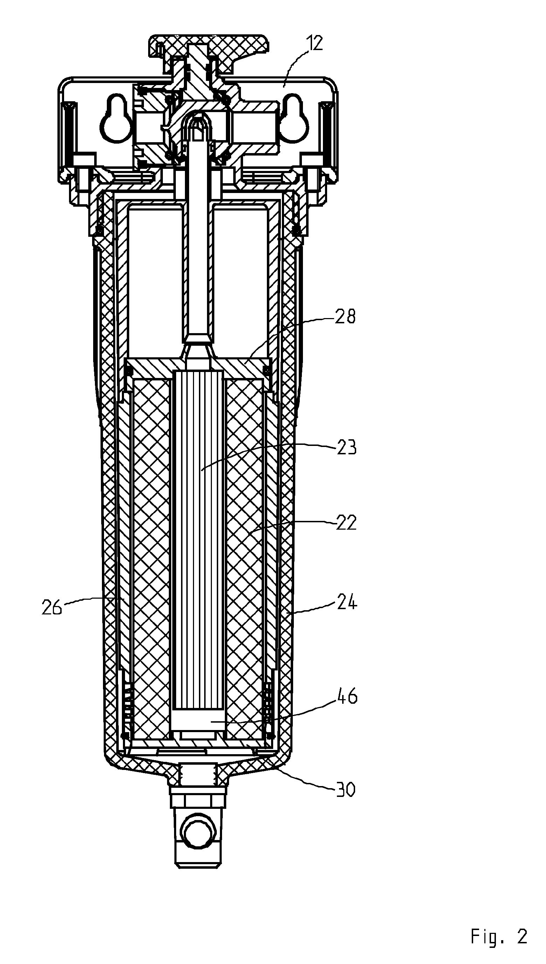

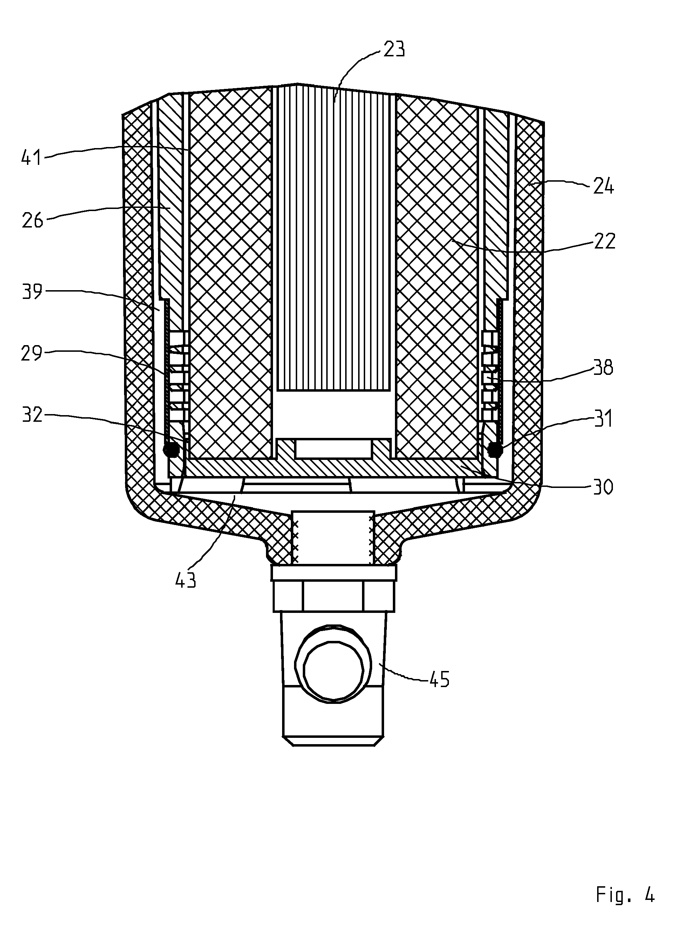

Die Anordnung ist in Fig.2 im Querschnitt dargestellt. Ein zylindrischer Filter 22 aus Aktivkohle sitzt in einer topfförmigen Filtertasse 24, welche ein lösbares Gehäuse bildet. Im Innenraum 46 des Filters 22 ist ein weiterer Filter 23 aus einem antibakteriellen Material angeordnet. Zwischen Filter 22 und Filtertasse 24 sitzt ein rohrförmiges Strömungsleitelement 26. Am oberen und unteren Ende des Filters 22 sitzen Filterhalter 28 und 30 aus Kunststoff. Der untere Filterhalter 30 ist tellerförmig mit einem Rand 32 versehen (Fig.4). Auf der Oberseite weist der Filterhalter 30 einen ringförmigen Vorsprung 32 auf. Das rohrförmige Strömungsleitelement 26 ist auf diesen Vorsprung aufgesteckt. Im unteren Bereich weist das Strömungsleitelement 26 eine Vielzahl von Öffnungen 38 auf, welche den Zwischenraum 39 zwischen der Filtertasse und dem Strömungsleitelement mit dem Zwischenraum 41 zwischen dem Strömungsleitelement und dem Filter 22 verbinden. Im Bereich vor den Öffnungen 38 ist ein zylindrisches Sieb 29 vorgesehen. Das Sieb 29 umschließt den unteren Bereich des Strömungsleitelements 26 und ist gegen dieses mit einer Dichtung 31 abgedichtet.

Der Zwischenraum 39 ist ferner mit einem Hohlraum 43 am Boden der Filtertasse 24 verbunden. Über diesen Hohlraum 43 und einen Absperrhahn 45 wird eine Verbindung nach außen hergestellt.

Der obere Filterhalter 28 ist ebenfalls tellerförmig und weist einen nach unten ragenden Rand 40 auf. In der Mitte des Filterhalters 28 ist ein Durchgang 42, der von einem sich nach oben erstreckenden Einsatzteil 44 umgeben ist. Der Durchgang steht mit einem Innenraum 46 des Filters 22 in Verbindung.

Das Einsatzteil 44 weist einen topfförmigen äußeren Körper 49 auf. Mit seinem unteren Rand 51 ist der Körper 49 auf den oberen Rand 53 des Strömungsleitelements 26 aufgesteckt. Das Strömungsleitelement 26 wird an seiner Oberseite von dem tellerförmigen Filterhalter 28 abgeschlossen. Eine Dichtung 47 dichtet das Einsatzteil 44 gegen den oberen Filterhalter 28 ab. Das Einsatzteil 44 bildet ferner einen Kanal 55 durch einen rohrförmigen Mittelteil 57. Der Kanal 55 schließt sich oben an den Durchgang 42 an. Zwischen dem Mittelteil 57 und einem nach oben vorstehenden Rand 59 des oberen Filterhalters 28, welcher den Durchgang 42 umgibt, ist ein Ringspalt 61 vorgesehen. Der Ringspalt 61 stellt eine Verbindung zwischen dem Durchgang 42 bzw. dem Kanal 55 und einem Ringraum 63 her, der in dem Einsatzteil 44 zwischen dem rohrförmigen Mittelteil 57 und dem topfförmigen äußeren Körper 49 gebildet ist. Der Ringraum 63 bildet eine Kammer, die nach oben vollständig geschlossen ist. Die einzige Öffnung des Ringraums 63 wird von dem Ringspalt 61 im untersten Bereich gebildet. Im Betrieb ist die Kammer in dem Ringraum 63 mit Luft gefüllt. Der in dem Ringraum 63 herrschende Luftdruck entspricht dem Wasserdruck, der in dem Durchgang 42 und dem Kanal 55 herrscht, zum Beispiel 4 bar.

Wasser, das außen von oben durch den Ringraum 39 fließt, fließt zunächst nach unten. Im Bereich der Öffnungen 38 fließt das Wasser durch das Sieb in horizontaler Richtung nach innen zum Filter 22. Anschließend fließt das Wasser durch den inneren Filter 23 gefiltert zurück nach oben durch den Durchgang 42 und den Kanal 55 in dem Einsatzteil 44.

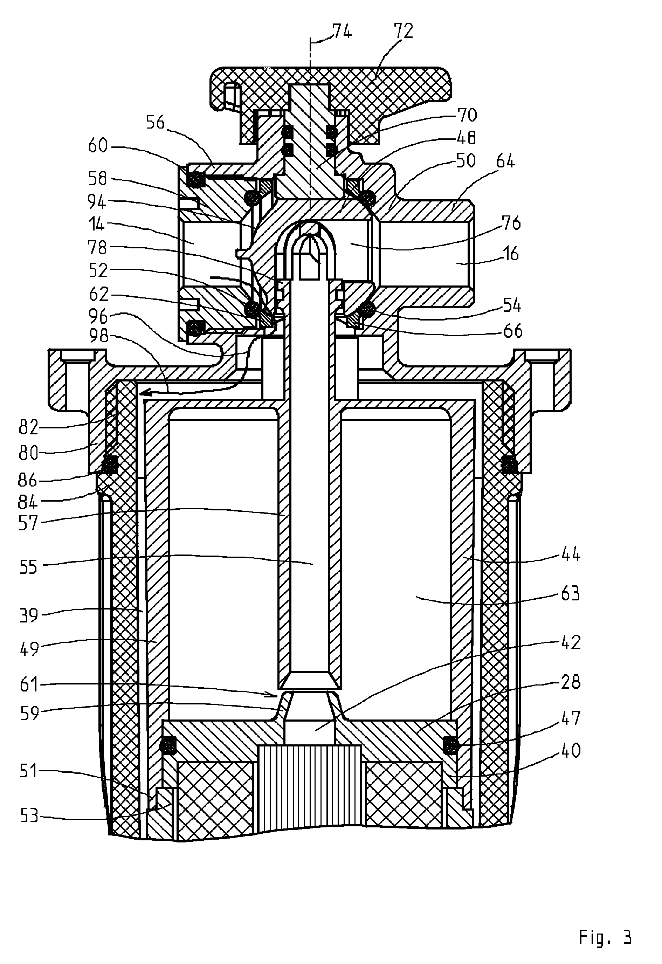

Zum Warten, Reinigen oder Austauschen des Filters 22 wird die Wasserströmung mit der Kugelhahnanordnung 10 abgesperrt, die in Fig.3 im Detail dargestellt ist. Fig.3 zeigt die Betriebsstellung der Anordnung.

Die Kugelhahnanordnung 10 umfasst eine Kugel 48, die in einem Gehäuse 50 angeordnet ist. Zwischen Gehäuse 50 und Kugel 48 sind Dichtringe 52 und 54 vorgesehen. Das Gehäuse hat am Einlass 14 einen Einlassstutzen 56. In dem Einlassstutzen 56 ist ein koaxiales Verbindungsteil 58 vorgesehen. Das Verbindungsteil 58 ist mit einer Dichtung 60 in dem Einlassstutzen 56 abgedichtet. Die Dichtung 52 sitzt einerseits in einer Ringnut in dem Verbindungsteil 58. Andererseits wird die Dichtung 52 von einem Kunststoffring 62 mit entsprechend der Kugel 48 gekrümmter Innenseite in ihrer Lage gehalten.

Auslassseitig weist das Gehäuse 50 einen Auslassstutzen 64 auf. Der Auslassstutzen 64 weist eine Ringnut für die Dichtung 54 auf. Weiterhin wird die Dichtung 54 von einem Kunststoffring 66 mit entsprechend der Kugel 48 gekrümmter Innenseite in ihrer Lage gehalten.

Die Kugel weist an der Oberseite eine rechteckige Nut auf. In die Nut greift ein korrespondierender Vorsprung eines Bolzens 70, der abdichtend durch das Gehäuse 50 durch nach außen geführt ist. Der Bolzen 70 ist mit einem Griff 72 verbunden. Durch Drehen des Griffs 72 kann so die Kugel um eine Achse 74 gedreht werden.

Die Kugel 48 ist mit einem gewinkelten Durchgang 76 versehen. Der Durchgang 76 mündet in der Betriebsstellung, die in Fig. 3 dargestellt ist, einerseits in den Auslass 16. Andererseits ist ein Anschlussadapterteil 78, das in das Einsatzteil 44 integriert ist, von unten in Fig.3 in den Durchgang 76 eingesteckt. Das Anschlussadapterteil 78 ist in die Kugel 48 eingesteckt.

Das Gehäuse 50 ist nach unten in Fig.3 hin offen und bildet einen Deckel 80 für die Filtertasse 24. Mit einem Gewinde 82 wird die Filtertasse 24 in den Deckel 80 des Gehäuses 50 bis zu einem Anschlag 84 eingeschraubt. Zwischen Deckel 80 und Filtertasse 24 ist oberhalb des Anschlags 84 eine Dichtung 86 angeordnet.

Das Wasser fließt aus dem Filter 23 durch den Durchgang 42 und den Kanal 55 im Einsatzteil 44 und durch das Anschlussadapterteil 78 in den Durchgang 76. In der Betriebsstellung mündet der Durchgang 76 im Auslass 16.

Einlassseitig fließt das Wasser vom Einlass 14 durch das Verbindungsteil 58 zur Kugel 48. Die Kugel 48 ist mit einer Delle 94 versehen. In der Betriebsstellung (Fig.3) liegt die Delle 94 neben der Dichtung 52. Das Wasser kann also außen an der Kugel an der Dichtung vorbei bis zum äußeren Bereich des Anschlussadapterteils 78 fließen. Von dort gelangt es durch einen Hohlraum 96 zwischen Gehäuse 50 und Anschlussadapterteil 78 und in den Ringraum 39 außerhalb des Filters 22. Der Strömungsweg ist durch einen Pfeil 98 illustriert. In der Betriebsstellung ist also sowohl der Strömungsweg vom Einlass 14 zum Außenraum des Filters, als auch der Strömungsweg vom Innenraum des Filters zum Auslass freigegeben.

In der Wartungsstellung ist die Kugel 48 um 90° verdreht. Dann ist die Kugel "vollständig" und das Verbindungsteil 58 mit der Dichtung 52 gegen die Kugel 48 abgedichtet. Der Einlass 14 ist somit blockiert. Der Durchgang 76 ist um 90° verdreht und mündet nicht mehr im Auslassstutzen 64. Der Auslassstutzen 64 ist mit der Dichtung 54 gegen die Kugel abgedichtet. Damit ist der Auslass 16 blockiert. Es kann kein Wasser durch die Kugelhahnanordnung fließen.

In dieser Stellung kann die Filtertasse 24 abgeschraubt werden. Der Filter 22 bleibt dabei gewöhnlich in dem Einführstutzen hängen und kann von Hand abgenommen werden. Ein neuer oder gereinigter Filter kann in die gelöste Filtertasse 24 eingesetzt werden.

Zum einfachen Rückspülen werden Einlass und Auslass ebenfalls mittels des Kugelhahns geschlossen. Anschließend wird der Absperrhahn 45, der auch als Kugelhahn ausgeführt ist, geöffnet. Die in dem Ringraum 63 befindliche Luft steht unter einem Druck, der dem Wasserdruck in Betriebsstellung entspricht. Der an dem geöffneten Hahn 45 vorliegende Außenluftdruck ist bei normalen Umständen wesentlich geringer. Der Überdruck in dem Ringraum 63 drückt entsprechend durch den Ringspalt 61 in Richtung Absperrhahn 45. Das in dem Filter befindliche Wasser fließt durch den Hahn 45 nach unten ab. Durch den Druckunterschied und den geringen Strömungsquerschnitt wird eine hohe Strömungsgeschwindigkeit erreicht. Die Wasserströmung nimmt die in dem Filter befindlichen Partikel mit. Die Rückspülung ist beendet, wenn das Wasser vollständig aus der Filteranordnung entleert ist.

Beim nachfolgenden Öffnen des Einlasses und des Auslasses füllt sich der Filter vollständig mit Wasser. Da die Luft in dem Ringraum 63 jedoch nicht nach oben entweichen kann, verbleibt sie in der Luftkammer. Auf diese Weise ist zu jedem Zeitpunkt ein Luftdruckkissen für die Rückspülung vorhanden.

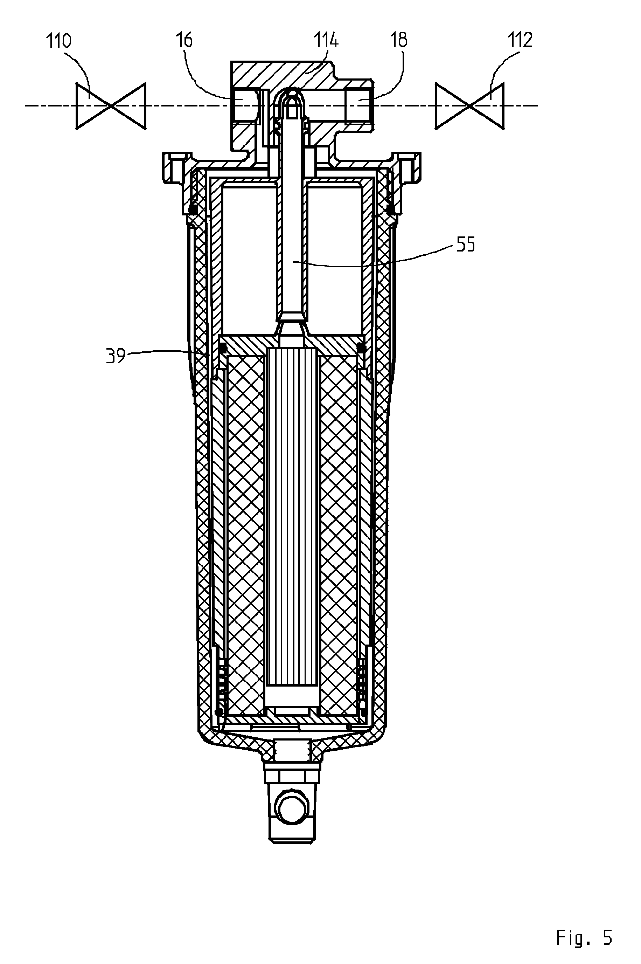

Die beschriebene Anordnung weist einen Kugelhahn auf, welcher sowohl den Einlass als auch den Auslass absperrt. Es versteht sich, dass die Anordnung auch mit einer einfachen Absperrung 110 am Einlass und einer weiteren Absperrung 112 am Auslass arbeiten kann. Eine solche Anordnung ist schematisch in Fig. 5 dargestellt. Das Gehäuse 114 zum Anschließen an die Rohrleitung kann dann entsprechend einfacher ausgeführt werden. Einlass 16 ist ständig mit dem Hohlraum 39 verbunden und der Auslass 18 ist ständig mit dem Kanal 55 verbunden.

Die beschriebene Anordnung kann zum Beispiel zum Filtern von Trinkwasser unterhalb eines Waschbeckens oder dergleichen verwendet werden. Dieser Bereich ist häufig in einem Schrank eingebaut und schwer zugänglich. Die vereinfachte Einführung des Filters mit der Filtertasse und Vorzentrierung des Filters sind bei dieser Verwendung besonders hilfreich. Zur Vermeidung einer aufwändigen Verlegung von Rohrleitungen erfolgen die Wasseranschlüsse mittels flexiblen Schläuchen. Die gezeigte Anordnung wird mittels einer Wandhalterung 12 an der Wand befestigt.

## Patentansprüche

1. Filteranordnung zum Filtern von Trinkwasser mit einem absperrbaren Einlass (14) und einem absperrbaren Auslass (16) und einem zwischen dem Einlass und dem Auslass angeordneten Filter (22, 23) **dadurch gekennzeichnet, dass**
(a) zwischen Filter und Auslass eine Kammer (63) vorgesehen ist, die im unteren Bereich (61) mit dem Filter in Verbindung steht und die im oberen Bereich abgeschlossen ist, so dass sich in der Kammer ein Luftkissen bildet und
(b) zwischen Einlass und Filter ein absperrbarer Ablauf (45) vorgesehen ist.

2. Anordnung nach Anspruch 1, **dadurch gekennzeichnet, dass** der Filter im unteren Bereich einer Filtertasse (24) angeordnet ist, die am Boden einen absperrbaren Ablauf (45) aufweist.

3. Anordnung nach Anspruch 2, **dadurch gekennzeichnet, dass** die Kammer (63) in einem Einsatzteil (44) im oberen Bereich der Filtertasse gebildet ist, welches einen Kanal (55) zur Verbindung des Filters (22, 23) mit dem Auslass (16) aufweist.

4. Anordnung nach Anspruch 2 oder 3, **dadurch gekennzeichnet, dass** in der Filtertasse (24) ein äußerer Hohlraum (39) von einer Wandung (26, 49) gebildet ist, in welchem das Wasser vom Einlass (14) nach unten fließt, das Wasser durch Öffnungen (48) in der Wandung in den Innenraum (46) der Filtertasse (24) mit dem Filter (22, 23) fließt.

5. Anordnung nach Anspruch 4, **dadurch gekennzeichnet, dass** ein Sieb (29) vor den Öffnungen (48) vorgesehen ist.
